Europäisches Patentamt

European Patent Office

Office européen des brevets

(19)

(11) Veröffentlichungsnummer: **0 248 006**
**B1**

(12) **EUROPÄISCHE PATENTSCHRIFT**

(45) Veröffentlichungstag der Patentschrift: **13.06.90**

(51) Int. Cl.⁵: **G 01 N 27/12**

(21) Anmeldenummer: **86900734.4**

(22) Anmeldetag: **10.01.86**

(86) Internationale Anmeldenummer:
**PCT/DE86/00007**

(87) Internationale Veröffentlichungsnummer:
**WO 86/04143 17.07.86 Gazette 86/17**

(54) VORRICHTUNG ZUR ANZEIGE EINES UNERWÜNSCHTEN GASES.

(30) Priorität: **11.01.85 DE 3500412**

(43) Veröffentlichungstag der Anmeldung:
**09.12.87 Patentblatt 87/50**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
**FR-A-2 462 704**
**US-A-3 868 846**
**US-A-3 915 135**
**US-A-4 028 642**

(73) Patentinhaber: **BEUTLER MASCHINENBAU-
UND VERTRIEBSGESELLSCHAFT INHABER
WOLFGANG BEUTLER
Schleswagweg 2
D-2440 Göhl (DE)**

(72) Erfinder: **BEUTLER, Wolfgang
Welterpfad 53
D-1000 Berlin 48 (DE)**

(74) Vertreter: **Jander, Dieter, Dipl.-Ing. et al
Dipl.-Ing. Dieter Jander Dr.-Ing. Manfred Böning
Patentanwälte Kurfürstendamm 66
D-1000 Berlin 15 (DE)**

Courier Press, Leamington Spa, England.

## Beschreibung

Die Erfindung bezieht sich auf eine Vorrichtung zur Anzeige eines unerwünschten Gases mit einem Detektor, insbesondere Halbleiterdetektor, dessen ohm'scher, bei Einwirken des Gases auf den Detektor sich ändernder Widerstand gemessen wird, mit einer einen Steuerkreis bildenden Heizung für den Detektor, bestehend aus einem Heizelement und einem elektronischen Steuerbaustein zur Steuerung der über dem Heizelement abfallenden Heizspannung und mit einer temperaturabhängigen Widerstandsanordnung zur Kompensation des Einflusses der Umgebungstemperatur auf den Detektor.

Die Widerstandsanordnung weist im allgemeinen einen Halbleiter, nämlich einen sogenannten Kaltleiter oder Heißleiter auf. Der Steuerbaustein ist in der Regel ein sogenannter Festspannungsregler in Form eines integrierten Schaltkreises.

Beispielsweise kann man mit einer solchen Vorrichtung das unerwünschte Vorhandensein von Ammoniak in Kühlhäusern feststellen.

Bei einer bekannten auf dem Markt befindlichen Vorrichtung dieser Art liegt die Widerstandsanordnung in Form eines einzigen Widerstandes in Reihe mit dem Detektor. Die über diesem Widerstand abfallende Spannung wird im Meßsignal mitberücksichtigt. Diese Temperaturkompensation ist nicht sehr wirksam, insbesondere versagt sie bie großen Temperaturschwankungen (+40°C bis −40°C).

Der Erfindung liegt die Aufgabe zugrunde, die eingangs erwähnte Vorrichtung derart auszubilden, daß die Temperaturkompensation demgegenüber besser ist und insbesondere auch bei großen Temperaturschwankungen möglich ist.

Diese Aufgabe wird erfindungsgemäß dadurch gelöst, daß die Widerstandsanordnung im Steuerkreis des Steuerbausteins liegt derart, daß die über dem Heizelement abfallende Heizspannung der Umgebungstemperatur angepaßt und dadurch die Temperatur des Detektors konstant gehalten wird.

Auf diese Weise wird erreicht, daß die Temperaturkompensation außerordentlich wirksam ist und vorzugsweise auch bei großen Temperaturschwankungen möglich ist. Eine weitere Verbesserung besteht darin, daß die Schaltung durch die erfindungsgemäße Maßnahme vereinfacht wird.

Zweckmäßig ist es, wenn die Widerstandsanordnung aus mehreren Halbleiter-Widerständen besteht.

Eine bevorzugte Ausführungsform besteht darin, daß die Widerstandsanordnung aus einem Widerstand, dessen Widerstandswert sich bei Temperaturerniedrigung erhöht, und einem Widerstand, dessen Widerstandswert sich bei Temperaturerniedrigung erniedrigt, besteht.

Bei Verwendung eines Festspannungsreglers als Steuerbaustein ist es zweckmäßig, wenn zwischen der Steuerleitung des Reglers und der Null-Leitung der Halbleiter-Widerstand liegt, dessen Widerstandswert sich bei Temperaturerniedrigung erhöht.

Bei Verwendung eines Festspannungsreglers als Steuerbaustein ist es ferner zweckmäßig, wenn zwischen der Steuerleitung des Reglers und der die geregelte Spannung führenden Leitung der Halbleiter-Widerstand liegt, dessen Widerstandswert sich bei Temperaturerniedrigung erniedrigt.

Eine weitere Verbesserung gemäß der Erfindung besteht darin, daß parallel zu dem Widerstand, dessen Widerstandswert sich bei Temperaturerniedrigung erniedrigt, ein Widerstand liegt, desen Widerstandswert weitgehend temperaturunabhängig ist.

Sodann wird vorgeschlagen, daß die Gesamtheit, bestehend aus einem Teil, das den Detektor und das Heizelement umfaßt, der Widerstandsanordung und dem Regler, von einer Kappe aus schlecht wärmeleitendem Material, z.B. Plexiglas, mit mindestens einer kleinen Öffnung nach außen umgeben ist.

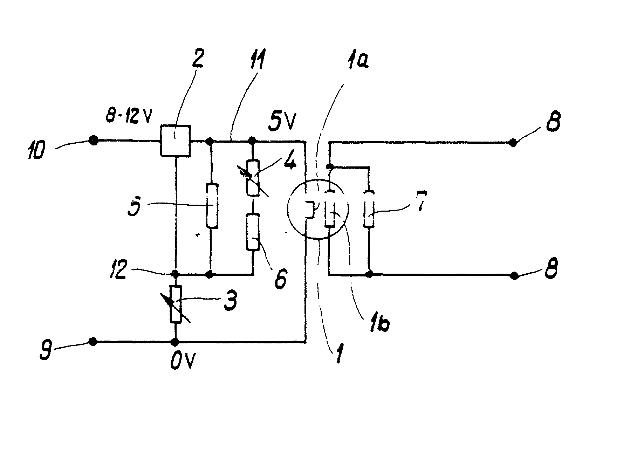

Weitere Einzelheiten der Erfindung ergeben sich aus der einzigen Figur der Zeichnung, in der ein Schaltbild einer Ausführungsform der Erfindung veranschaulicht ist.

Darin ist mit 1 ein Teil mit einem Heizdraht 1a als Heizelement und einem Halbleiterdetektor 1b, mit 2 ein Festspannungsregler, mit 3 Halbleiter-Widerstand, dessen Widerstandswert sich bei Temperaturerniedrigung erhöht, also ein sogenannter Heißleiter, mit 4 ein Halbleiter-Widerstand, dessen Widerstandswert sich bei Temperaturerniedrigung erniedrigt, also ein sogenannter Kaltleiter, mit 5 ein Widerstand, dessen Widerstandswert bei Temperaturänderung weitgehend konstant bleibt, mit 6 ein Schutzwiderstand und mit 7 ein weiterer Widerstand bezeichnet.

Der Heizdraht 1a wird erhitzt, und zwar derart, daß der Halbleiterdetektor 1b eine Temperatur von etwa 250°—300°C annimmt. Dieser Halbleiterdetektor 1b spricht dann auf das Vorhandensein eines unerwünschten Gases an. An den Ausgängen 8 kann somit festgestellt werden, ob in den Raum, in dem sich die erfindungsgemäße Vorrichtung befindet, ein unerwünschtes Gas eingedrungen ist oder nicht.

Die Temperatur des Halbleiterdetektors 1b muß konstant gehalten werden. Das wird zunächst dadurch erreicht, daß sich in dem Heizkreis des Heizdrahtes 1a der Festspannungsregler 2 befindet. Am Eingang 9 liegt 0 Volt, am Eingang 10 liegt eine Spannung von 8—12 Volt. Die Spannung in der Leitung 11 ist 5 Volt konstant.

Wäre die Schaltung ohne Temperaturkompensation ausgelegt, dann würde bei Absinken der Umgebungstemperatur das bei 8 anstehende Meßsignal sich ändern und beispielsweise das Vorhandensein eines unerwünschten Gases vortäuschen.

Die erfindungsgemäße Schaltung ist jedoch so ausgelegt, daß sich die Heizspannung für den Heizdraht 1a mit der Temperatur ördert, und zwar derart, daß sie sich erhöht, wenn die Umgebungstemperatur absinkt. Das wird mit Hilfe der beiden Widerstände 3 und 4 erreicht. Man kann sich das foldendermaßen klarmachen: Sinkt die Umgebungstemperatur, dann steigt die über dem Widerstand 3 abfallende Spannung an. Zugliech sinkt die über dem Widerstand 4 abfallende Spannung ab. Der Regler 2 arbeitet von Hause aus derart, daß die Spannung zwischen der Leitung 11 und dem Schaltungspunkt 12 stets 5 Volt beträgt. Demgemäß ist die über dem Heizdraht 1a abfallende Spannung entsprechend größer.

Der Widerstand 3 ändert sich bei einer Temperaturschwankung von −40°C bis +40°C etwa zwischen 2000—100Ω. Der Widerstand 4 ändert sich bei der gleichen Temperaturdifferenz etwa von $10^3$—$2 \cdot 10^5 \Omega$. Der Widerstand 5 beträgt 5,6 kΩ. Er dient als Begrenzungswiderstand. Der Widerstand 6 beträgt 1 kΩ.

Bei 30—40°C Umgebungstemperatur ist die Spannung über dem Heizdraht 1a ca. 5 Volt. Der Widerstand des Heißleiters 3 ist dann so niedrig, daß er praktisch keinen Einfluß auf die Heizspannung ausübt. Der Widerstand des Kaltleiters 4 ist dann so groß, daß darüber praktisch kein Strom fließt. Der Strom über den Widerstand 5 ist überdies sehr klein. Bei fallender Umgebungstemperatur tritt die erwähnte Steuerwirkung der Schaltung ein.

Die Gesamtheit, bestehend aus dem Teil 1, der Widerstandsanordnung 3, 4, 5 und dem Regler 2, ist von einer nicht dargestellten Kappe aus schlecht wärmeleitendem Material, z.B. Plexiglas, umgeben, die mindestens eine kleine Öffnung nach außen aufweist. Durch die Kappe wird erreicht, daß die Temperatur in der Umgebung des Halbleiterdetektors 1b bei niedrigen Umbungstemperaturen außerdem hoch gehalten wird. Die Temperatur innerhalb der Kappe wird durch den Heizdraht 1a und in geringem Umfang auch durch den Regler 2 erhöht. Die Widerstände 3 und 4 erfassen diese Temperatur und bewirken die bewußte Regelung.

## Patentansprüche

1. Vorrichtung zur Anzeige eines unerwünschten Gases mit einem Detektor (1b), insbesondere Halbleiterdetektor, dessenn ohm'scher, bei Einwirken des Gases auf den Detektor (1b) sich ändernder Widerstand gemessen wird, mit einer einen Steuerkreis bildenden Heizung für den Detektor, bestehend aus einem Heizelement (1a) und einem elektronischen Steuerbaustein (2) zur Steuerung der über dem Heizelement (1a) abfallenden Heizspannung und mit einer temperaturabhängigen Widerstandsanordnung (3, 4, 5) zur Kompensation des Einflusses der Umgebungstemperatur auf den Detektor (1b), dadurch gekennzeichnet, daß die Widerstandsanordnung (3, 4, 5) im Steuerkreis des Steuerbausteins (2) liegt derart, daß die über dem Heizelement (1a) abfallende Heizspannung der Umgebungstemperatur angepaßt und dadurch die Temperatur des Detektors (1b) konstant gehalten wird.

2. Vorrichtung nach Anspruch 1, dadurch gekennzeichnet, daß die Widerstandsanordnung (3, 4, 5) aus mehreren Halbleiter-Widerständen besteht.

3. Vorrichtung nach Anspruch 2, dadurch gekennzeichnet, daß die Widerstandsanordnung aus einem Widerstand (3), dessen Widerstandswert sich bei Temperaturerniedrigung erhöht, und einem Widerstand (4), dessen Widerstandswert sich bei Temperaturerniedrigung erniedrigt, besteht.

4. Vorrichtung nach Anspruch 3, dadurch gekennzeichnet, daß bei Verwendung eines Festspannungsreglers (2) als Steuerbaustein zwischen der Steuerleitung des Reglers (2) und der Null-Leitung der Halbleiter-Widerstand (3) liegt, dessen Widerstandswert sich bei Temperaturerniedrigung erhöht.

5. Vorrichtung nach Anspruch 3 oder 4, dadurch gekennzeichnet, daß bei Verwendung eines Festspannungsreglers (2) als Steuerbaustein zwischen der Steueerleitung des Reglers (2) und der die geregelte Spannung führenden Leitung (11) der Halbleiter-Widerstand (4) liegt, dessen Widerstandswert sich bei Temperaturerniedrigung erniedrigt.

6. Vorrichtung nach Anspruch 4 und 5, dadurch gekennzeichnet, daß parallel zu dem Widerstand (4), dessen Widerstandswert sich bei Temperaturerniedrigung erniedrigt, ein Widerstand (5) liegt, dessen Widerstandswert weitgehend temperaturunabhängig ist.

7. Vorrichtung nach einem oder mehreren der Ansprüche 1 bis 6, dadurch gekennzeichnet, daß die Gesamtheit, bestehend aus einem Teil (1), das den Detektor (1b) und das Heizelement (1a) umfaßt, der Widerstandsanordnung (3, 4, 5) und dem Regler (2), von einer Kappe aus schlecht wärmeleitendem Material, z.B. Plexiglas, mit mindestens einer kleinen Öffnung nach außen umgeben ist.

## Revendications

1. Dispositif servant à indiquer la présence d'un gaz indésirable comportant un détecteur (1b), en particulier un détecteur à semi-conducteur, dont on mesure la résistance qui varie lors de l'action du gaz sur le détecteur (1b), un dispositif de chauffage constituant un circuit de commande et destiné au détecteur, ledit dispositif étant constitué d'un élément de chauffage (1a) et d'un composant électronique de commande (2) en vue de la commande de la tension de chauffage appliquée à l'élément de chauffage (1a), et un ensemble de résistances (3, 4, 5) dépendant de la température destiné à la compensation de l'influence de la température ambiante sur le détecteur (1b), caractérisé en ce que l'ensemble de résistances (3, 4, 5) est disposé dans le circuit de commande du composant (2) de manière à ce que la tension de chauffage appliquée à élément de chauffage (1a) soit adaptée à la température ambiante et que, par suite, la température du détecteur (1b) soit maintenue constante.

2. Dispositif selon la revendication 1, caractérisé en ce que l'ensemble de résistances (3, 4, 5) est constitué de plusieurs résistances à semi-conducteur.

3. Dispositif selon la revendication 2, caractérisé en ce que l'ensemble de résistances est constitué d'une résistance (3) dont la valeur de la résistance augmente pour une diminution de la température et d'une résistance (4) dont la valeur de la résistance diminue pour une diminution de la température.

4. Dispositif selon la revendication 3, caractérisé en ce que, dans le cas de l'utilisation d'un régulateur de tension fixe (2) en tant que composant de commande, la résistance à semi-conducteur (3) dont la valeur de résistance augmente pour une diminution de la température est disposée entre la ligne de commande du régulateur (2) et la ligne de niveau zéro.

5. Dispositif selon la revendication 3 ou 4, caractérisé en ce que, lors de l'utilisation d'un régulateur de tension fixe (2) en tant que composant de commande, la résistance à semi-conducteur (4) dont la valeur de résistance diminue pour une diminution de la température, est disposée entre la ligne de commande du régulateur (2) et la ligne (11) transmettant la tension régulée.

6. Dispositif selon la revendication 4 ou 5, caractérisé en ce qu'une résistance (5) dont la valeur de résistance est, dans une large mesure, indépendante de la température, est branchée en parallèle sur la résistance (4) dont la valeur de résistance diminue pour une diminution de la température.

7. Dispositif selon l'une ou plusieurs des revendications 1 à 6, caractérisé en ce que l'ensemble constitué par une partie (1) qui comprend le détecteur (1b) et l'élément de chauffage (1a), l'ensemble de résistances (3, 4, 5) et le régulateur (2), est entouré d'un capot en matière mauvaise conductrice de la chaleur, par exemple du plexiglas, et comportant au moins une petite ouverture vers l'extérieur.

**Claims**

1. A device for indicating an unwanted gas, comprising a detector (1b), more particularly a semi-conducting detector having an ohmic resistance which varies and is measured when the gas acts on the detector (1b), a control circuit in the form of a heating system for the detector and comprising a heating element (1a) and an electronic control module (2) for controlling the heating voltage which drops across the heating element (1a), and a temperature-dependent resistance arrangement (3, 4, 5) for compensating the influence of the ambient temperature on the detector (1b), characterised in that the resistance arrangement (3, 4, 5) is disposed in the control circuit of the control module (2) so that the heating voltage which drops across the heating element (1a) is matched to the ambient temperature, thus keeping the temperature of the detector (1b) constant.

2. A device according to claim 1, characterised in that the resistance arrangement (3, 4, 5) comprises a number of semiconductor resistors.

3. A device according to claim 2, characterised in that the resistance arrangement comprises a resistor (3) having a resistance which increases when the temperature falls, and a resistor (4) having a resistance which decreases when the temperature falls.

4. A device according to claim 3, characterised in that, when a fixed-voltage regulator (2) is used as the control module, the semiconductor resistor (3), the resistance of which increases when the temperature falls, is disposed between the neutral conductor and the control line of the regulator (2).

5. A device according to claim 3 or 4, characterised in that, when a fixed-voltage regulator (2) is used, the semiconductor resistor (4), the resistance of which decreases when the temperature falls, is disposed between the control line of the regulator (2) and the line (11) carrying the regulated voltage.

6. A device according to claims 4 and 5, characterised in that a resistor (5) having a resistance substantially independent of temperature is connected in parallel with the resistor (4), the value of which decreases when the temperature falls.

7. A device according to one or more of claims 1 to 6, characterised in that the total comprising the regulator (2), the resistance arrangement (3, 4, 5) and a part (1) which includes the detector (1b) and the heating element (1a), is externally surrounded by a cap made of material which is a poor conductor of heat, e.g. plexiglass, and having at least one small opening.